# EUROPEAN PATENT SPECIFICATION

(11) **EP 0 765 804 B1**
(45) Date of publication and mention of the grant of the patent: **09.10.2002**
(21) Application number: 96114496.1
(22) Date of filing: 10.09.1996
(51) Int. Cl.: B62M 23/02

(54) **Bicycle with assisting power apparatus**
Hilfsantrieb für Fahrräder
Bicyclette à assistance motorisée

(30) Priority: 29.09.1995 JP 27500495
(43) Date of publication of application: 02.04.1997
(73) Proprietor: HONDA GIKEN KOGYO KABUSHIKI KAISHA, Minato-ku Tokyo (JP)
(72) Inventor: Kuroki, Masahiro, 4-1, Chuo 1-chome, Wako-shi, Saitama (JP); Tanaka, Kunihiko, 4-1, Chuo 1-chome, Wako-shi, Saitama (JP)
(74) Representative: Liska, Horst, Dr.-Ing.

(56) References cited:
- EP-A- 0 636 536
- PATENT ABSTRACTS OF JAPAN vol. 095, no. 002, 31 March 1995 & JP 06 305478 A (HONDA MOTOR CO LTD), 1 November 1994,

## Description

### Technical Field to Which the Invention Belongs

This invention relates to a bicycle with an assisting power apparatus for assisting the human power with the power of a motor.

### Prior Art

A bicycle with an assisting power apparatus is disclosed in the official gazette of Japanese Patent Laid-open No. Hei 4-100790 or the official gazette of Japanese Patent Laid-open No. Hei 6-305478.

In those conventional bicycles with an assisting power apparatus, a crankshaft including pedals and a rear axle are connected to each other by bevel gears and a drive shaft without relying upon a chain power transmission mechanism, and a torque sensor for detecting the force of pedaling applied to a pedal is provided for the drive shaft.

In such a bicycle of the drive shaft power transmission system as described above, if the distance between the axes of the crankshaft and the rear axle is not set accurately, then the engagement of the bevel gears is not performed smoothly, and accordingly, much attention must be paid to mounting of the rear axle and a high degree of rigidity of the vehicle body must be assured. Consequently, it is difficult to raise the productivity in assembling operation, to achieve reduction in weight of the vehicle body or to promote reduction in cost.

EP 0 636 536 A1 discloses an electrically power-assisted bicycle which uses a chain power transmission mechanism. The basic components of the power assisting apparatus disclosed therein are an electric motor driving a sprocket wheel via a speed reducing transmission mechanism and a torque transmission hub which is integrally connected to the sprocket wheel. In addition, a controller arrangement comprising a speed sensor and a torque sensor measuring the absolute torque applied by the pedaling force to a crankshaft is provided.

### Summary of the Invention

The present invention relates to an improved bicycle with an assisting power apparatus which overcomes problems as described above. According to the present invention, a bicycle with an assisting power apparatus is provided which includes a crankshaft having integrally mounted on the opposite ends thereof base ends of a pair of pedal arms; a drive sprocket wheel; a motor; a speed reducing mechanism connected to an output of said motor; a hollow torque transmission member in the form of a pipe or a tube fitted for relative rotation on an outer periphery of said crankshaft; a control means for detecting a force of pedaling applied to the pair of pedal arms and controlling the output power of the motor in response to a detected value of the force of pedaling; and a torque sensor; wherein said drive sprocket wheel is integrally fitted at an end of said hollow torque transmission member; said crankshaft is connected to said hollow torque transmission member by a pedaling force one-way clutch; and a motor one-way clutch is provided at another end of said speed reducing mechanism. The bicycle with an assisting power apparatus according to the present invention is characterized in that said motor one-way clutch is provided on said hollow torque transmission member adjacent said drive sprocket wheel; said pedaling force one-way clutch is connected to another end of said hollow torque transmission member; and a magneto-striction type torque sensor is disposed on an outer periphery of said hollow torque transmission member.

Since the present invention is constructed in such a manner as described above, although the bicycle is provided with the assisting power apparatus, since power can be transmitted to the rear wheel by the chain power transmission apparatus, some error is permitted for the distance between the axes of the crankshaft and the rear axle, and mounting of the rear wheel is simplified and the rigidity of the vehicle body need not be kept to a high level. Accordingly, the operability in assembly can be improved and reduction in weight of the vehicle body can be achieved.

Further, in the present invention, since the hollow torque transmission member is loosely fitted on the outer periphery of the crankshaft and the magneto-striction type torque sensor is disposed on the outer periphery of the hollow torque transmission member, the bicycle is formed compact similarly to an ordinary bicycle of the chain driving type, and although the bicycle is provided with the assisting power apparatus, an increase in size and an increase in weight of the bicycle are suppressed and besides reduction in cost can be achieved.

Furthermore, in the present invention, since the forces of pedaling applied to the left and right pedals provided at the opposite ends of the crankshaft are both transmitted to the rear wheel by the torque transmission member and the forces of pedaling applied to the left and right pedals are detected with certainty by the magneto-striction type torque sensor provided on the outer periphery of the torque transmission member, running by the assisting power apparatus is performed appropriately.

### Embodiment of the Invention

In the following, an embodiment of the present invention shown in the drawings will be described.

### BRIEF DESCRIPTION OF THE DRAWINGS

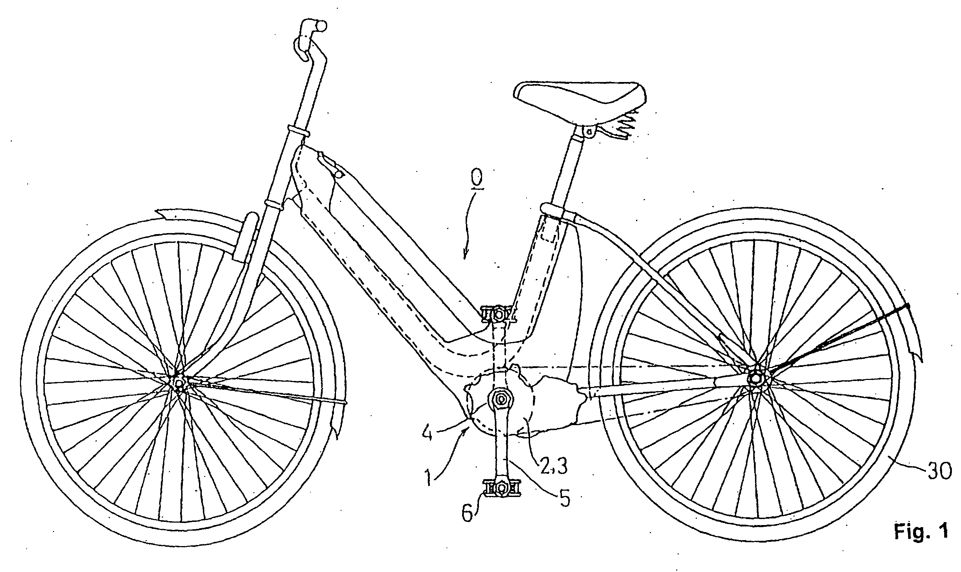

FIG. 1 is a side elevational view of an embodiment of a bicycle with an assisting power apparatus according to the present invention.

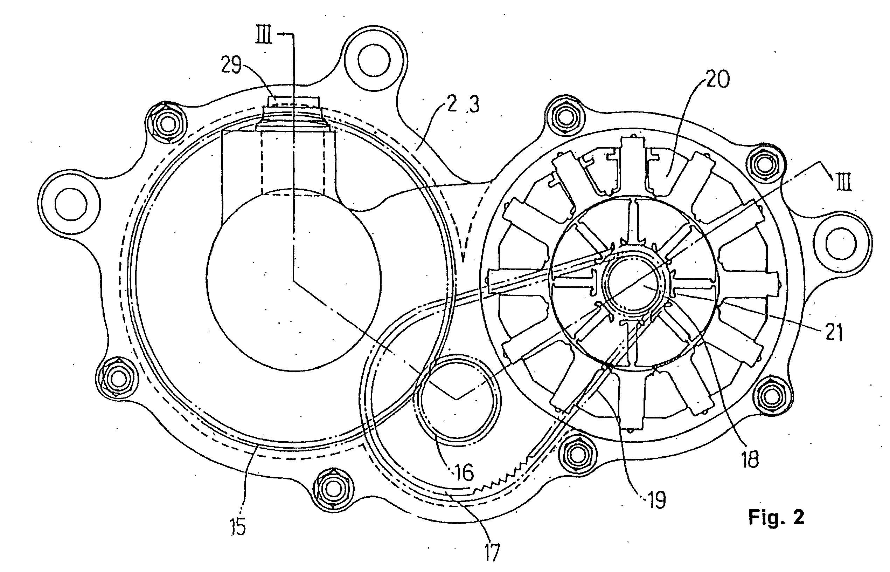

FIG. 2 is an enlarged side elevational view of essential part of FIG. 1.

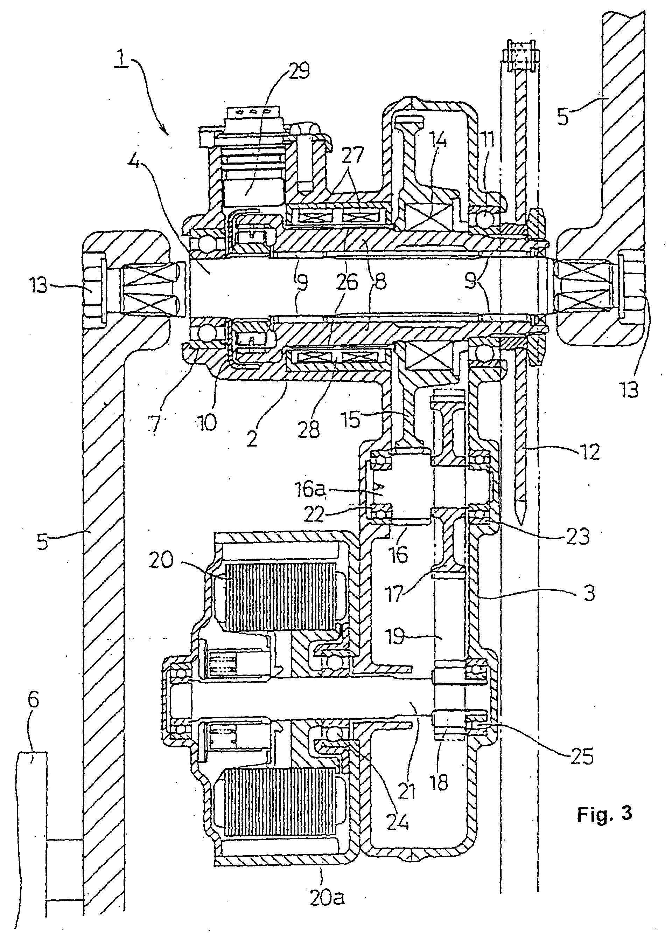

FIG. 3 is a sectional view taken along line III-III of FIG. 2.

Components of an assisting power apparatus 1 are disposed in a closed space surrounded by a left-side assisting power apparatus casing 2 and a right-side assisting power apparatus cover 3, and the assisting power apparatus 1 is integrally mounted on a bicycle body 0.

A pair of pedal arms 5 are removably and integrally mounted at the opposite ends of a crankshaft 4, and a pedal 6 is mounted for rotation at an end of each of the pedal arms 5. A left side portion of the crankshaft 4 is fitted for rotation in a ball bearing 7 of the assisting power apparatus casing 2.

Further, a hollow torque transmission member 8 in the form of a tube is fitted for rotation on an outer periphery of the crankshaft 4 with a needle bearing 9 interposed therebetween, and a ratchet one-way clutch 10 as a pedaling force one-way clutch is interposed between the crankshaft 4 and the hollow torque transmission member 8 adjacent the ball bearing 7. A right side portion of the hollow torque transmission member 8 is fitted for rotation in the assisting power apparatus cover 3 with a ball bearing 11 interposed therebetween, and a drive sprocket wheel 12 is spline coupled to a right side portion of the hollow torque transmission member 8 which is exposed to the right from the assisting power apparatus cover 3 while a ball head lock nut 13 is integrally screwed at a right end portion of the hollow torque transmission member 8.

Furthermore, a driven gear 15 is fitted on the hollow torque transmission member 8 at a position on the inner side of the ball bearing 11 with a sprag one-way clutch 14 interposed therebetween which serves as a motor one-way clutch. A driven toothed pulley 17 is integrally fitted on a shaft portion 16a of a reduction gear 16 which is held in mesh with the driven gear 15. A driving toothed pulley 18 is integrally fitted on a rotary shaft 21 of a dc motor 20. A toothed endless belt 19 extends between and around the driven toothed pulley 17 and the driving toothed pulley 18. Consequently, if the dc motor 20 is rendered operative, the power of the dc motor 20 is transmitted to the hollow torque transmission member 8 via the driving toothed pulley 18, toothed endless belt 19, driven toothed pulley 17, reduction gear 16, driven gear 15 and sprag one-way clutch 14 so that the hollow torque transmission member 8 is rotated to drive a rear wheel 30 to rotate in an advancing direction.

It is to be noted that the reduction gear 16 is supported for rotation on the assisting power apparatus casing 2 and the assisting power apparatus cover 3 with ball bearings 22 and 23 interposed therebetween, respectively. The rotary shaft 21 of the dc motor 20 is supported for rotation on a casing 20a of the dc motor 20 and the assisting power apparatus cover 3 with ball bearings 24 and 25 interposed therebetween, respectively.

Meanwhile, a thin belt 26 made of an amorphous magnetic alloy is integrally wrapped on an outer periphery of the hollow torque transmission member 8 between the ratchet one-way clutch 10 and the sprag one-way clutch 14, and a pair of torque detection coils 27 are disposed on an inner periphery of the assisting power apparatus casing 2 positioned outwardly of the thin belt 26. Thus, when torque acts upon the hollow torque transmission member 8, a. variation in permeability of the thin belt 26 by a shearing strain applied to the thin belt 26 is detected by the torque detection coils 27, and the torque is detected from outputs generated from the torque detection coils 27. A crankshaft rotational speed sensor 29 is provided outwardly of the ratchet one-way clutch 10.

And, a control apparatus not shown which receives detection signals of the aforementioned magneto-striction type torque sensor 28 and the crankshaft rotational speed sensor 29 and controls the dc motor 20 is provided. When a rotational speed detection signal generated from the crankshaft rotational speed sensor 29 is lower than a predetermined value and a torque detection signal generated from the magneto-striction type torque sensor 28 of the torque detection coils 27 exceeds another predetermined value, the control apparatus supplies dc current to the dc motor 20 to increase the applied voltage to the dc motor 20 in response to an increase of the torque detection signal described above.

Since the embodiment shown is constructed in such a manner as described above, when the running resistance of the road face is low and the force of pedaling applied to any of the pedal 6 is low, the torque applied to the hollow torque transmission member 8 is so low that the detection signal from the magneto-striction type torque sensor 28 is lower than the predetermined value, and the dc motor 20 is not energized. Consequently, the crankshaft 4 is driven to rotate by the forces of pedaling of the pedals 6 while the dc motor 20 remains in an inoperative condition. The rotational force of the crankshaft 4 is transmitted to the drive sprocket wheel 12 via the ratchet one-way clutch 10 and the hollow torque transmission member 8 so that the rear wheel 30 is driven to rotate in the advancing direction, and consequently, the bicycle can run.

And, even if the rotational speed of the crankshaft 4 becomes lower than the rotational speed of the hollow torque transmission member 8, the hollow torque transmission member 8 can rotate idle by the ratchet one-way clutch 10, and the crankshaft 4 and the pedal 6 can keep their stopping conditions.

On the other hand, even if the driven toothed pulley 17 stops while the dc motor 20 is in an inoperative condition, the hollow torque transmission member 8 can rotate idle with respect to the driven toothed pulley 17 by the driven toothed pulley 17, and the running obstructing force by stopping of the driven toothed pulley 17 does not act upon the hollow torque transmission member 8 and the drive sprocket wheel 12 can rotate lightly.

Subsequently, if the bicycle comes to an upward slope or the running resistance of the road face increases or otherwise the bicycle tries to increase its speed greatly while the rotational speed of the crankshaft 4 detected by the crankshaft rotational speed sensor 29 remains lower than the predetermined value, since the torque applied to the crankshaft 4, that is, to the hollow torque transmission member 8, increases so that the detected torque value of the magneto-striction type torque sensor 28 exceeds the predetermined value, dc current of a voltage corresponding to the detected torque value of the magneto-striction type torque sensor 28 is supplied to the dc motor 20 by the control apparatus not shown. Consequently, the forces of pedaling applied to the pedals 6 are assisted by the power from the dc motor 20, and the bicycle can run lightly.

Further, since the hollow torque transmission member 8 concentrical with the crankshaft 4 is connected to the rear wheel 30 via the drive sprocket wheel 12 and the chain power transmission mechanism, some error is permitted for the distance between the axes of the hollow torque transmission member 8 and the rear axle. Consequently, the mounting operation of the rear wheel 30 is simplified, and the rigidity of the bicycle body 0 need not be kept to a high level any more and reduction in weight and reduction in cost of the bicycle body 0 can be achieved.

Furthermore, since the speed reducing mechanism formed from the driven gear 15, reduction gear 16, driven toothed pulley 17, driving toothed pulley 18 and toothed endless belt 19 is interposed between the hollow torque transmission member 8 and the dc motor 20, the dc motor 20 can be rotated at a high speed, and reduction in size of the dc motor 20 can be achieved.

Besides, in a conventional bicycle with an assisting power apparatus wherein torque applied to a crankshaft is detected directly, since a crankshaft output member is disposed on one end side of the crankshaft, only the force of pedaling applied to a pedal on the other end side of the crankshaft at which the crankshaft output member is not provided, where a driver who exhibits a great difference between the forces of pedaling applied to the left and right pedals rides on the bicycle, appropriate assisting power running cannot be achieved. However, in the present embodiment, since the forces of pedaling applied to the pedals 6 at the opposite ends of the crankshaft 4 are transmitted to the drive sprocket wheel 12 via the hollow torque transmission member 8 and the forces of pedaling at the opposite ends are both detected accurately by the magneto-striction type torque sensor 28 provided on the outer periphery of the hollow torque transmission member 8, even if a great difference is present between the forces of pedaling applied to the left and right pedals 6, the forces of pedaling can be detected accurately, and assisting power running by the power of the dc motor 20 can be performed appropriately.

In summary it is an object to provide a bicycle with an assisting power apparatus which is less expensive and light and can assist the human power with power of a motor.

A hollow torque transmission member 8 in the form of a pipe or a tube is fitted for relative rotation on an outer periphery of a crankshaft 4 having base ends of a pair of pedal arms 5 integrally mounted at the opposite ends thereof and a drive sprocket wheel 12 is integrally fitted at an end of the hollow torque transmission member 8 while a motor one-way clutch 14 is provided on the hollow torque transmission member 8 adjacent the drive sprocket wheel 12 and the crankshaft 4 is connected to the other end of the hollow torque transmission member 8 via a pedaling force one-way clutch 10, and an input end of the motor one-way clutch 14 is connected to an output of a motor 20 via a speed reducing mechanism 15, 16, 17, 18 and 19 and a magneto-striction type torque sensor 28 is disposed on an outer periphery of the hollow torque transmission member 8.

## Claims

1. A bicycle with an assisting power apparatus (1) comprising:
- a crankshaft (4) having integrally mounted at the opposite ends thereof base ends of a pair of pedal arms (5),
- a drive sprocket wheel (12),
- a motor (20),
- a speed reducing mechanism (15, 16, 17, 18, 19) connected to an output of said motor (20),
- a hollow torque transmission member (8) in the form of a pipe or a tube fitted for relative rotation on an outer periphery of said crankshaft (4),
- a control means for detecting a force of pedaling applied to the pair of pedal arms (5) and controlling the output power of the motor (20) in response to a detected value of the force of pedaling,
- a torque sensor (28),
wherein
- said drive sprocket wheel (12) is integrally fitted at an end of said hollow torque transmission member (8),
- said crankshaft (4) is connected to said hollow torque transmission member by a pedaling force one-way clutch (10),
- a motor one-way clutch (14) is provided at another end of said speed reducing mechanism (15, 16, 17, 18, 19),
**characterized in that**
- said motor one-way clutch (14) is provided on said hollow torque transmission member (8) adjacent said drive sprocket wheel (12),
- said pedaling force one-way clutch (10) is connected to another end of said hollow torque transmission member (8), and
- a magneto-striction type torque sensor (28) is disposed on an outer periphery of said hollow torque transmission member (8).

## Patentansprüche

1. Fahrrad mit einer Hilfsantriebsvorrichtung (1), umfassend:
- eine Kurbelwelle (4), an deren gegenüberliegenden Enden Basisenden eines Paars von Pedalarmen (5) integral angebracht sind,
- ein Antriebskettenrad (12),
- einen Motor (20),
- einen Untersetzungsmechanismus (15, 16, 17, 18, 19), der mit einem Ausgang des Motors (20) verbunden ist,
- ein hohles Drehmomenübertragungselement (8) in der Form einer Röhre oder eines Rohrs, das zur relativen Drehung an einem Außenumfang der Kurbelwelle (4) angebracht ist,
- ein Steuer/Regelmittel zur Erfassung einer Pedalkraft, die auf ein Paar von Pedalarmen (5) ausgeübt wird, und zum Steuern/Regeln der Ausgangsleistung des Motors (20) in Antwort auf einen erfassten Wert der Pedalkraft,
- einen Drehmomentsensor (28),
wobei
- das Antriebskettenrad (12) integral an einem Ende des hohlen Drehmomentübertragungselements (8) angebracht ist,
- die Kurbelwelle (4) mit dem hohlen Drehmomentübertragungselement durch eine Pedalkraft-Einwegkupplung (10) verbunden ist,
- eine Motor-Einwegkupplung (14) an einem anderen Ende des Untersetzungsmechanismus (15, 16, 17, 18, 19) vorgesehen ist,
**dadurch gekennzeichnet, dass**
- die Motor-Einwegkupplung (14) an dem hohlen Drehmomentübertragungselement (8) angrenzend an das Antriebskettenrad (12) vorgesehen ist,
die Pedalkraft-Einwegkupplung (10) mit einem anderen Ende des hohlen Drehmomentübertragungselements (8) verbunden ist, und
ein Drehmomentsensor (28) vom Magnetostriktionstyp an einem Außenumfang des hohlen Drehmomentübertragungselements (8) angeordnet ist.

## Revendications

1. Bicyclette munie d'un dispositif mécanique d'assistance (1) comportant :
- un vilebrequin (4) ayant, montées en un seul bloc au niveau de ses extrémités opposées, des extrémités de base d'une paire de bras de pédale (5),
- une roue formant pignon d'entraînement (12)
- un moteur (20),
- un mécanisme de réduction de vitesse (15, 16, 17, 18, 19) connecté à une sortie dudit moteur (20),
- un élément creux de transmission de couple (8) ayant la forme d'un tuyau ou d'un tube agencé pour une rotation relative sur une périphérie extérieure dudit vilebrequin (4),
- au moins un moyen de commande pour détecter une force de pédalage appliquée à la paire de bras de pédale (5), et pour commander la puissance de sortie du moteur (20) en réponse à une valeur détectée de la force de pédalage,
- un détecteur de couple (28),
dans laquelle,
- ladite roue formant pignon d'entraînement (12) est agencée en un seul bloc au niveau d'une extrémité dudit élément creux de transmission de couple (8),
- ledit vilebrequin (4) est connecté audit élément creux de transmission de couple par un embrayage à une voie de force de pédalage (10),
- un embrayage à une voie de moteur (14) est agencé au niveau de l'autre extrémité dudit mécanisme de réduction de vitesse (15, 16, 17, 18, 19),
**caractérisée en ce que**,
- ledit embrayage à une voie de moteur (14) est agencé sur ledit élément creux de transmission de couple (8) adjacent à ladite roue formant pignon d'entraînement (12),
- ledit embrayage à une voie de force de pédalage (10) est connecté à une autre extrémité dudit élément creux de transmission de couple (8), et
- un détecteur de couple de type magnétostrictif (28) est disposé sur une périphérie extérieure dudit élément creux de transmission de couple (8).
